# EUROPEAN PATENT APPLICATION

(11) **EP 3 808 497 A1**
(43) Date of publication of application: **21.04.2021**
(21) Application number: 19203736.4
(22) Date of filing: 17.10.2019
(51) Int. Cl.: B23P 19/00, B23P 19/04, B25J 15/00, B25J 15/06

(54) **METHOD AND DEVICE FOR AUTOMATED APPLICATION OF ADHESIVE PADS TO A WORKPIECE**

(71) Applicant: Nitto Belgium NV, 3600 Genk (BE)
(72) Inventor: LUDWIG, Michael, 47059 Duisburg (DE); PARLOO, Eli, 3600 Genk (BE)
(74) Representative: Grünecker Patent- und Rechtsanwälte PartG mbB

(57) **Abstract**

The present invention refers to a method for automated application of adhesive pads (14) to a workpiece, for example a vehicle component, comprising a loading step, wherein at least one adhesive pad (14) is loaded into an adhesive pad handling system (4); and an attaching step, wherein at least one adhesive pad loaded into an adhesive pad handling system is attached to the workpiece. It is the objective technical problem of the present invention to provide a method for automated application of adhesive pads to a workpiece, preferably a vehicle component, which overcomes the disadvantages of the methods known from the state of the art. Especially, the method should lead to a reduction of cycle times for attaching the adhesive pads (14) to the workpiece. This problem is solved in that the loading step and the attaching steps are at least in parts performed simultaneously. Furthermore, the invention also refers to a device (1) for performing the method.

## Description

The present invention refers to a method for automated application of adhesive pads to a workpiece, for example a vehicle component, comprising a loading step, wherein at least one adhesive pad is loaded into an adhesive pad handling system; and an attaching step, wherein at least one adhesive pad loaded into an adhesive pad handling system is attached to the workpiece.

Furthermore, the invention also refers to a device for automated application of adhesive pads to a workpiece, for example a vehicle component, comprising a loading system for loading an adhesive pad handling system with at least one adhesive pad and an attaching system for attaching at least one adhesive pad loaded into an adhesive pad handling system to the workpiece.

In automotive production processes, particularly in the assembly and processing of car bodies, a large number and variety of openings in vehicle components or car body parts are required, for example for fixation of further components, to provide access to car body cavities, to facilitate painting and waxing steps and/or for anti-corrosion purposes.

To avoid ingression of dirt and moisture and thereby prevent corrosion throughout the vehicle lifetime, and in order to decrease the noise level within the vehicle to acceptable levels, it is known to close the openings in the further production process by hole covering means, for example by elastic plugs. Such plugs require manual insertion. The manual insertion of these plugs is cumbersome and expensive.

It is also known to use adhesive pads for the hole covering. Such adhesive pads used as hole covers should ideally secure permanent sealing against humidity and dirt, and exhibit favorable sound blocking properties, excellent chemical resistance, temperature resistance, and mechanical properties (i.e. ability to withstand mechanical impacts and a high flexibility to enable application on uneven surfaces).

These adhesive pads can be multilayered patches, wherein the multilayered patches comprise a first layer and a pressure-sensitive adhesive layer. The pressure-sensitive adhesive layer comprises a mixture of: a styrene-based triblock copolymer, a styrene-based diblock copolymer, and at least one hydrocarbon resin selected from the group of aromatic modified aliphatic hydrocarbon resins, partially hydrogenated resins, and fully hydrogenated resins. The first layer can comprise a metal or a metal alloy, or a polymer and has a strain at break according to ASTM D638 of at least 10%. A release liner can be provided on at least a part of the surface of the pressure-sensitive adhesive layer. In order to provide for a sufficient sound and vibration damping function, the multilayer patches preferably exhibit a total basis weight of 0.4 to 5 kg/m2, more preferably between 1.4 to 3.8 kg/m2, which may be suitably adjusted by selecting the thickness and the material of each of the layers. Preferably, the basis weight of the first layer is within the range of 0.05 to 4.95 kg/m2, especially preferably 0.2 to 4 kg/m2, such as from 0.4 to 3.5 kg/m2 or from 0.6 to 3 kg/m2. The basis weight of the pressure-sensitive adhesive layer is preferably in the range of 0.05 to 0.5 kg/m2, such as 0.1 to 0.4 kg/m2

Preferably, one or more additional layers may be provided between the first layer and the pressure-sensitive adhesive layer or on the surface of the first layer opposed to the pressure-sensitive adhesive layer side. The additional intermediate layers may be composed of structural damping material (which may include a viscoelastic material, preferably a rubber, more preferably butyl rubber, or a bitumen based material, preferably asphalt). Layers applied on the surface of the first layer opposed to the pressure-sensitive adhesive layer side may include anti-corrosion coating layers. A preferred multilayered patch used as hole cover comprises a second layer between and in contact with the first layer and the pressure-sensitive adhesive layer. The basis weight of the second layer is preferably less than 1.5 kg/m2, further preferably within the range of 0.3 to 1.45 kg/m2, especially preferably 0.5 to 1.4 kg/m2. If the first layer comprises a polymer, it may be further preferred that the second layer comprises a mixture of the materials constituting the first layer and the pressure-sensitive adhesive layer. For example, it may be preferred that the second layer consists of a mixture of the first layer material and the pressure-sensitive adhesive layer material at a volume ratio of 10:90 to 95:5, more preferably 50:50 to 90:10, especially preferably 60:40 to 85:15. This configuration is particularly preferred when using a thermoplastic elastomer in the first layer, since it further improves the compatibility between the first layer and the pressure-sensitive adhesive layer (thereby preventing delamination) and reduces migration of resin out of the pressure-sensitive adhesive layer which may result in loss of adhesion upon aging. In addition, the second layer can then be easily formed by recycling of discarded sheet material after die-cutting of sheet material, for example by co-extrusion of the discarded material. Optionally a release liner can be provided on at least a part of the surface of the pressure-sensitive adhesive layer. The first layer comprises styrene-ethylene/butylene-styrene (SEBS) at a content of 5 to 30% by weight, an elastomer at a content of 5 to 15% by weight, a filler at a content of 60 to 90% by weight, and an optional colorant at a content of 0 to 5% by weight, each based on the total weight of the first layer. The pressure-sensitive adhesive layer comprises a mixture of: a styrene-based triblock copolymer selected from styrene-butadiene-styrene (SBS) or styrene-ethylene/butylene-styrene (SEBS), a styrene-based diblock copolymer, the total content of the styrene-based triblock copolymer and a styrene-based diblock copolymer being in the range of 30 to 60% by weight based on the total weight of the pressure-sensitive adhesive layer, a hydrocarbon resin at a content in the range of 10 to 45% by weight and a filler at a content of 10 to 38% by weight, each based on the total weight of the pressure-sensitive adhesive layer. Adhesive hole covers comprising said configuration enable effective sealing, exhibit remarkable damping properties (which may be easily varied by selection of the first layer thickness), excellent chemical resistance, temperature resistance, adhesive properties (both on oily or non-oily metal surfaces and on coated metal surfaces) and mechanical properties (i.e. balance of flexibility and structural strength), may be produced in a simple and inexpensive manner since the same equipment may be used for the preparation of each layer, and may be fully recycled, contrary to adhesive hole cover patches known in the art.

In order to save manpower and time, such adhesive pads are preferably applied in an automated process. A method and a device for the automated application of adhesive pads to a vehicle component is disclosed in DE 10 2010 051 786 A1. In this method, a plurality of adhesive pads are arranged on a liner sheet. The liner sheet with the adhesive pads arranged thereon is transferred to a fixing device and fixed on a surface of the fixing device via a vacuum. Then, an attaching device comprising a plurality of grippers is used to remove the adhesive pads from the liner sheet. Each gripper of the attaching device removes one adhesive pad from the liner sheet. When the attaching device is loaded with a plurality of adhesive pads, the adhesive pads are attached to the vehicle component via the attaching device. DE 10 2010 051 786 A1 also discloses a device for performing the method. The disadvantage of the method and the device is that the attaching cycle time is quite long as the the attaching device must first be loaded with the adhesive pads before the adhesive pads can be applied to the vehicle component.

It is therefore the objective technical problem of the present invention to provide a method and a device for automated application of adhesive pads to a workpiece, preferably a vehicle component, which overcomes the disadvantages of the devices known from the state of the art. Especially, the method and the device should lead to a reduction of the cycle times for attaching the adhesive pads to the workpiece.

In regard to the method, this technical problem is solved in that the loading step and the attaching step are at least in parts performed simultaneously. In the loading step, the adhesive pads are loaded into an adhesive pad handling system and in the attaching step, the adhesive pads loaded into an adhesive pad handling system are attached to a workpiece. As the loading step and the attaching step are at least in parts performed simultaneously, the cycle times can be reduced. It would for example be possible that one adhesive pad handling system is used which can perform the loading and attaching step simultaneously. Usually, in order to further save time, a plurality of adhesive pads are loaded into an adhesive pad handling system in the loading step and a plurality of adhesive pads loaded into an adhesive pad handling system are attached to the workpiece in the attaching step.

In a preferred variant of the method, however, a first adhesive pad handling system is loaded with at least one adhesive pad in the loading step while a second adhesive pad handling system attaches at least one adhesive pad to the workpiece in the attaching step. In this method, at least two adhesive pad handling systems are used simultaneously. The first adhesive pad handling system is loaded with adhesive pads while at the same time the second adhesive pad is unloaded by attaching the adhesive pads loaded therein to the workpiece. Preferably, the loading step is performed in a loading system and the attaching step is performed in an attaching system. It would also be possible to use more than two adhesive pad handling systems, for example three or more adhesive pad handling systems. In this case, the adhesive pad handling systems are loaded with adhesive pads and are kept in a storage zone so that they can be used when necessary.

In another advantageous embodiment of the inventive method, the loading step comprises providing at least one adhesive pad on a liner, wherein the liner with the at least one adhesive pad is provided on a coil. This is a space-saving way to furnish the adhesive pads in the loading step and an easy possibility to provide a large number of adhesive pads.

Preferably, the loading step can then comprise unwinding the liner from the coil and tensioning the liner with a transport and tensioning element. Unwinding and tensioning of the liner can be easily performed by using rolls or a roll system. The adhesive pads can easily be removed from the liner and loaded into the adhesive pad handling system when the liner is tensioned.

In still a further advantageous and simple embodiment of the inventive method, in the loading step, the unwinding of the liner from the coil and the loading of the adhesive pads into the adhesive pad handling system are synchronized. This means that the movement of the liner with the adhesive pads arranged thereon and the movement of the adhesive pad handling system is synchronized. This synchronization allows a simple design of the device necessary for performing the method. It could then be even possible to work without position detection devices for loading the adhesive pads into the adhesive pad handling system.

In still another embodiment, the loading step comprises providing at least one adhesive pad on a liner, wherein the liner with at least one adhesive pad is a sheet. This is another easy way to provide the adhesive pads. Also in this case it is necessary to tension the liner sheets when the adhesive pads are removed therefrom.

It would also be possible that, in the inventive method, at least two loaded adhesive pad handling systems are provided to be used in the attaching step. The two loaded adhesive pad handling systems are kept in storage and can be immediately used when necessary. If the adhesive pad handling system which is used in the attaching step is empty, the attaching process can immediately be continued because a further loaded adhesive pad handling system is ready for use and just needs to be inserted into the attaching step. Furthermore, the at least two adhesive pad handling systems which are kept in storage can be loaded with different adhesive pads, that means adhesive pads having different properties, for example size, thickness, material, etc.

A further advantage of the inventive method as described above is that the automated application of at least one adhesive pad to a workpiece, preferably to a vehicle component, can be easily integrated in the production line for the assembly of a car body. In order to further reduce the cycle times, changing of the adhesive pad handling systems, which are used in the attaching step, can be made when the car body in the production line is moved to the next handling station.

In regard to the inventive device, the objective technical problem as described above is solved by a device comprising at least two adhesive pad handling systems, so that a first of the adhesive pad handling systems is connected to the loading system for being loaded with adhesive pads while the second adhesive pad handling system is connected to the attaching system for attaching at least one adhesive pad to the workpiece. This device has the advantage that loading of the first adhesive pad handling system and attaching of adhesive pads to a workpiece using the second adhesive pad handling system can be performed simultaneously so that the cycle time can be reduced. It is also possible that the device comprises more than two adhesive pad handling systems. It is then possible to stock loaded adhesive pad handling systems which can immediately be used when necessary, that means when the adhesive pad handling system which is used in the attaching system is empty. Preferably, the attaching system comprises an articulated industrial robot and the loading system comprises a linear robot.

Each adhesive pad handling system comprises at least two grippers, preferably at least six grippers, for gripping the adhesive pads. This is a simple and effective way to load and hold the adhesive pads in the adhesive pad handling system. When the adhesive pad handling system is connected to the attaching system, the grippers hold the adhesive pads during the transfer to an attaching position and release the adhesive pads when attached to the workpiece at the attaching positions. The connection between the grippers and the gripping device is preferably a flexible connection. Such a flexible connection ensures that the adhesive pads can be attached exactly at the attaching position even if the adhesive pad handling system is not perfectly brought into this position, because the flexible or elastic connection between the gripper and the adhesive pad handling system allows a correction of the position.

In order to allow an economic application process, the adhesive pad handling system preferably comprises a plurality of grippers, wherein the grippers are arranged in a circle on the adhesive pad handling system and point in a radial direction. The gripping device preferably comprises twelve grippers.

Simple and effective loading of the adhesive pads to the adhesive pad handling system is possible, when the loading system is connected with at least one providing system for providing the adhesive pads.

In a further embodiment of the inventive device, the providing system comprises a tensioning and transport element. The adhesive pads can be provided on a liner which is wound as a coil. Unwinding and tensioning of the liner from the coil is performed by the transport and tensioning element. If the liner has the form of a sheet, the tensioning and transport element is adapted to transport the sheet to the loading system and to hold and tension the sheet when the adhesive pads are loaded into the adhesive pad handling system.

In still a further embodiment, the loading system is connected with at least two providing systems. This is an easy way to use different adhesive pads with the device. In the two providing systems adhesive pads having different properties, for example size, thickness, material, etc. can be furnished.

An easy and secure positioning and attaching of the adhesive pads at the attaching position on the workpiece can be achieved if at least the attaching system is provided with a position detection device. Such a position detection device can for example be a camera.

In still a further embodiment, the loading system and the attaching system are arranged in a common cell. Such a cell has small space requirements and can be easily integrated in an existing system, that is an existing production line in the automotive production industry. As the movements of the loading system and the attaching system in the loading step and the attaching step are performed in the cell, security requirements are fulfilled and there is no risk of injuries for operators. When the adhesive pads are provided on a coil, the coil can be arranged at the outside of the cell so that a coil change can be easily performed without entering the cell. The production process then does not need to be stopped for a coil change.

However, it would also be possible that the attaching system is a cooperating robot for the man-machine collaboration that can move in the production line without the need of special security or protection systems.

A simple connection of the adhesive pad handling system to the loading system and to the attaching system can be achieved if the at least one adhesive pad handling system is provided with at least one interface for an industrial robot.

In the following, the invention is described with the aid of figures.
Fig. 1 shows a perspective view of two devices for automated application of adhesive pads to a workpiece,
Fig. 2 shows a top view of the devices shown in Fig. 1,
Fig. 3 shows a perspective front view of a loading system of one of the devices shown in Fig.1,
Fig. 4 shows a perspective back view of the loading system shown in Fig. 3,
Fig. 5 shows a perspective view of an adhesive pad handling system of one of the devices shown in Fig. 1, and
Fig. 6 shows a perspective view of a gripper of the adhesive pad handling system of Fig. 5.

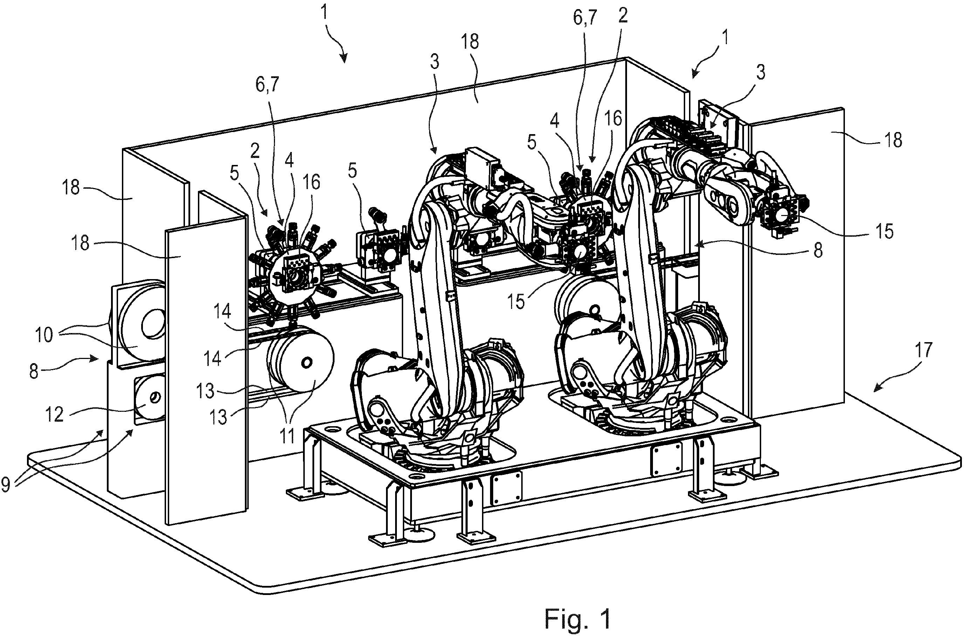

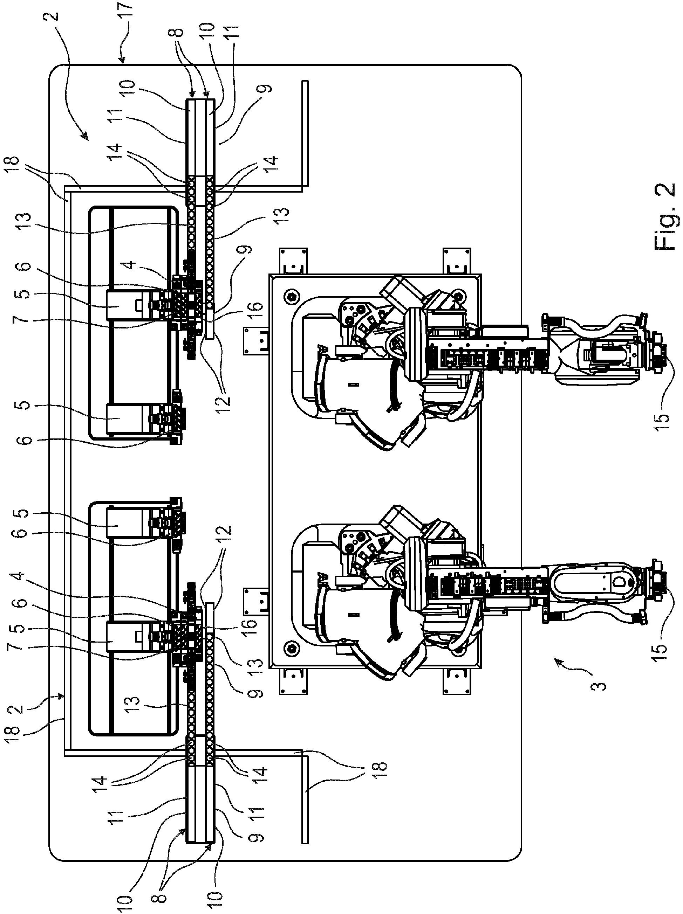

Fig. 1 shows two devices 1 for the automated application of adhesive pads 14 to a workpiece which are arranged side by side. Figure 2 shows a top view of these two devices 1. These devices 1 are used to apply adhesive pads 14 to openings in car bodies or in vehicle components. The adhesive pads can be multilayered patches as described before in regard to the prior art. It is also possible to use adhesive pads made of other materials. Each device 1 can be integrated in a production line in automotive production processes.

Each device 1 comprises a loading system 2 and an attaching system 3. With the loading system 2, adhesive pads 14 are loaded into an adhesive pad handling system 4. With the attaching system 3, adhesive pads 14 loaded into an adhesive pad handling system 4 are attached to a workpiece, that is to openings in car bodies or in vehicle components.

In Fig. 1 and 2, both devices 1 are shown in the same state. The following description therefore applies to each of the two devices 1 shown in Fig. 1 and 2. The loading system 2 comprises a holding element 5. The holding element 5 comprise a first interface 6 which can be connected to a second interface 7 of an adhesive pad handling system 4. In the embodiment shown in Fig. 1, the second interface 7 of each adhesive pad handling system 4 is connected to the first interface 6 of the holding element 5. The loading system 3 further comprises providing system 8 4 providing adhesive pads 14. The providing system 8 comprises a tensioning and transport element 9.

In the embodiment shown in the figures, the adhesive pads 14 are provided on a liner 13 which is wound up on a coil 10. Two coils 10 are connected to each loading system 2. For each coil 10 and a tensioning and transport element 9 is provided. Each tensioning and transport element 9 comprises at least two rolls 11, 12 for unwinding and tensioning the liner 13 with the adhesive pads 14 arranged thereon and for winding up the emptied liner 13 after the adhesive pads 14 have been removed from the liner.

It would also be possible to furnish the adhesive pads on liner is in the form of sheets (liner sheets). In this case, the providing system has to be adapted to provide and hold a liner sheet during loading of the adhesive pads to an adhesive pad handling system.

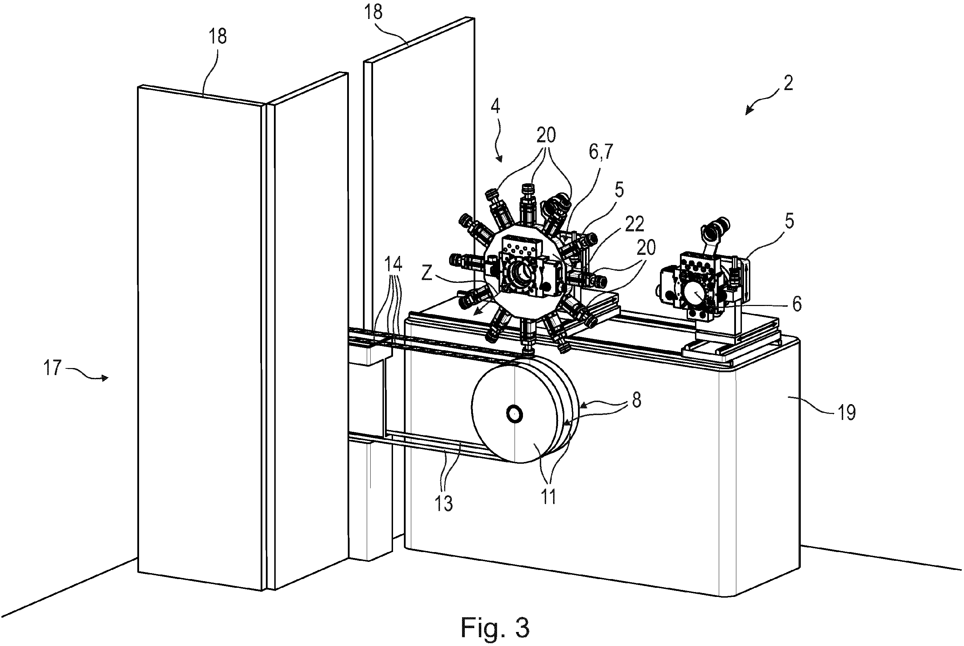

Preferably, the holding element 5 of the loading system 2 is a linear robot which can be connected to the adhesive pad handling system 4 via the second interface 7. With the linear robot, the adhesive pad handling system 4 is brought into a position above the liner 13 with the adhesive pads 14 arranged thereon. In this position, the adhesive pad handling system 4 can be loaded with adhesive pads 14. This loading mechanism is described in more detail below with regard to Fig. 3 to 6.

Preferably, the attaching system 3 is an articulated industrial robot. The attaching system 3 comprises a third interface 15 for connection with a corresponding fourth interface 16 on an adhesive pad handling system 4. When an adhesive pad handling system 4 is attached to the attaching system 3, the attaching system 3 enables a three-dimensional movement of the adhesive pad handling system 4 in space, so that the adhesive pads 14 loaded into the adhesive pad handling system 4 can be attached to an attaching position on the workpiece. Furthermore, the attaching system 3 comprises a position detection device (not shown) to detect the exact attaching position for the adhesive pads.

As can be seen in Fig. 1 and 2, the loading systems 2 and the corresponding attaching systems 3 are arranged in a common cell 17. In Fig. 1 and 2, two loading systems 2 and two attaching systems 3 are arranged in one cell. It would however also be possible to arrange only one loading system and one corresponding attaching system in one cell. The cell 17 is provided with walls, fences 18 or other suitable safety system, which form a protection shield against the exterior so that operators cannot come into contact with the moving loading system and the moving attaching system 3. It would be also possible to use a virtual cell wherein the borders of the virtual cell are protected by sensors, for example light beams, which trigger an alarm when the borders are crossed. The coils 10 with the adhesive pads 14 are arranged on the outside of cell 17 so that the coils 10 can be changed without entering the cell 17 and therewith without stopping the attaching process.

In the top view of the two devices 1 shown in Fig. 2, it can be seen that each loading system 2 comprises two providing systems 8. Therefore, two coils 10 with adhesive pads 14 are arranged in each loading system 2. The coils 10 are unwound and tensioned via the transport and tensioning element 9, that is via the rolls 11 and 12 of the transport and tensioning elements 9. Furthermore, each loading system 2 comprises two holding elements 5. In the embodiment shown in Fig. 2, an adhesive pad handling system 4 is connected to one of the holding elements 5 of each loading system 2. The adhesive pad handling system 4 is arranged above the liner 13 with the adhesive pads 14 arranged thereon so that the adhesive pads 14 can be loaded into the adhesive pad loading system 4. With the two holding systems 5 of each loading system 2, it is possible to process two adhesive pad handling systems in one loading system. For example, one loaded adhesive pad handling system can be kept ready while the other adhesive pad handling system is loaded with adhesive pads. Furthermore, due to the two providing systems 8, it is possible to load the adhesive pad loading systems in one loading system with adhesive pads having different properties, for example different size, thickness, or material.

Fig. 3 shows a perspective view of a loading system 2 of one of the devices 1 shown in Fig.1. As already described above, the loading system 2 comprises two holding elements 5. The holding elements 5 are preferable linear robots and are arranged on a common table 19. Each holding element 5 comprises a first interface 6 for connection with an adhesive pad handling system 4. In the embodiment shown in Fig. 3, only one adhesive pad handling system 4 is in the loading system 2. The adhesive pad handling system 4 is connected to the left holding element 5. A coil 10 (see Fig. 1 and 2) comprising a liner 13 with the adhesive pads 14 arranged thereon is inserted in each providing system 8. The liner 13 with the adhesive pads 14 arranged thereon is unwound and tensioned via the two rolls 11 and 12 (see Fig. 1 and 2). The adhesive pad handling system 4 comprises a plurality of grippers 20 for removing the adhesive pads 14 from the liner and for holding the adhesive pads 14 in the adhesive pad handling system 4.

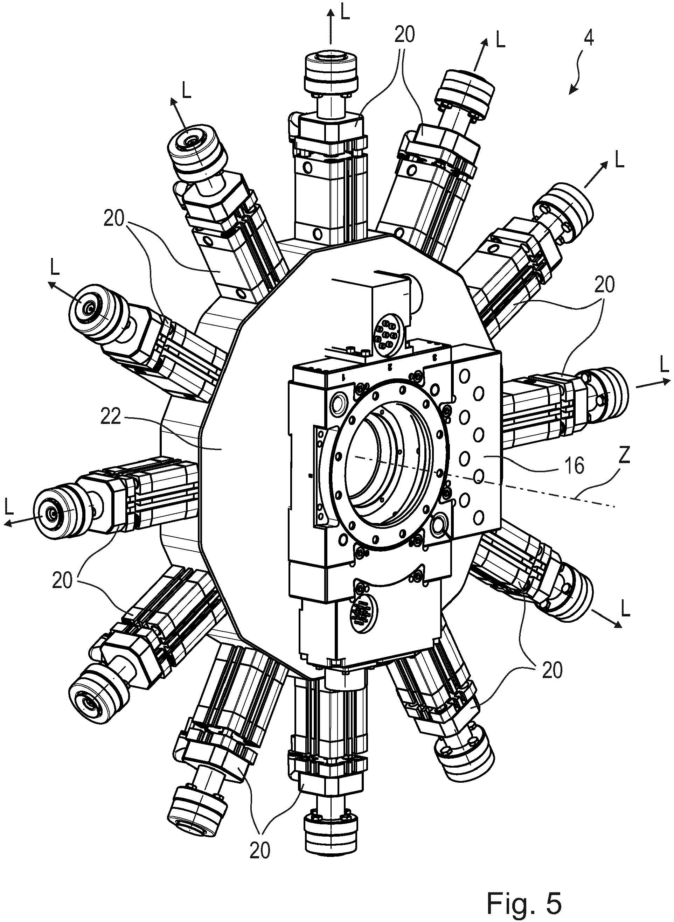

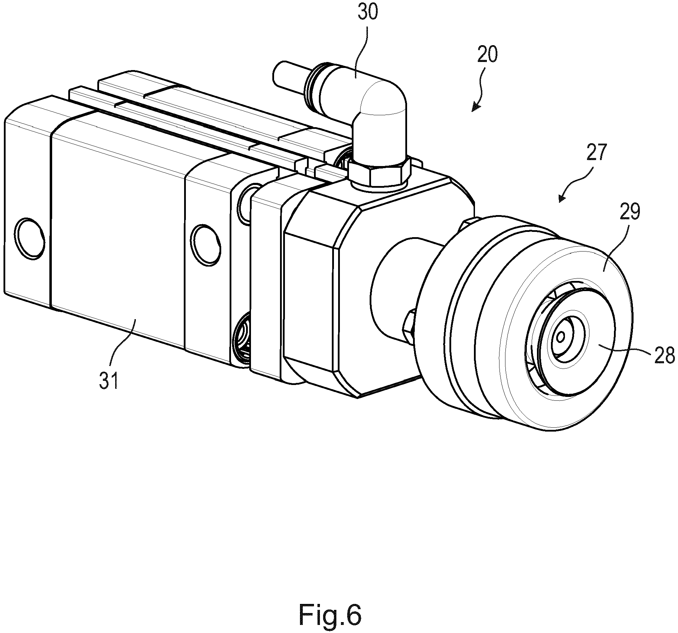

In the embodiment shown in Fig. 1 to 5, the adhesive pad handling system 4 comprises twelve grippers 20. The grippers 20 are attached to a central mounting plate 22 of the adhesive pad handling system 4. The grippers 20 are uniformly distributed around the circumference of the mounting plate 22, so that a gripper head 27 of each gripper 20, which is used for holding and attaching the adhesive elements, is arranged in a radial direction in regard to the central axis Z of the central mounting plate 22. The adhesive pad handling system 4 and the grippers 20 of the adhesive pad handling system 4 are described below in more detail with the aid of figures 5 and 6. As can be seen in figure 3, the loading system 2 is arranged essentially within the cabinet or walls 18 of the cell 17. Only the coils 10 with the adhesive pads and the empty liner 13 are arranged outside the walls 18 of the cell 17 so that they can easily be changed without entering the cell 17.

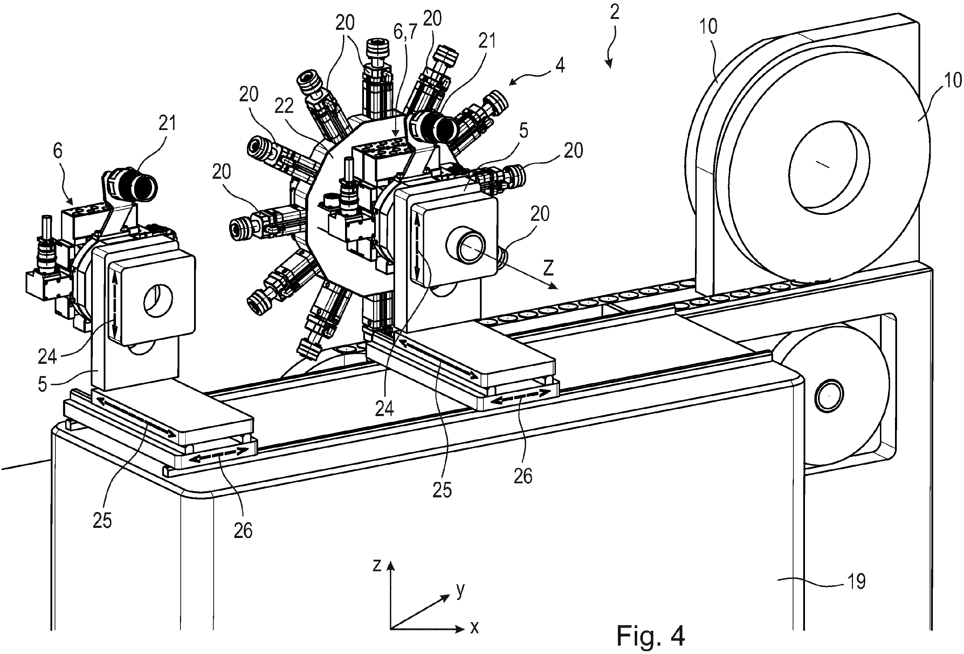

Fig. 4 shows a perspective view of the loading system 2 shown in Fig. 3. The coils 10 with the liner with the adhesive pads arranged thereon are provided on one end of the loading system 2. The two holding systems 5 are arranged on the common table 19. As already described, the holding systems 5 are preferably linear robots. Each holding system 5 comprises a first interface 6 which allows the connection to an adhesive pad handling system 4. Each adhesive pad handling system 4 comprises a second interface 7 for a connection with the first interface 6 of the holding systems 5. In the embodiment shown in figure 4, an adhesive pad handling system 4 is attached to one of the holding systems 5; the other holding system 5 is empty. Each holding system 5 is designed to allow a movement of the first interface 6, and therewith also of an adhesive pad handling system 4 attached to the interface 6, in three principal axes which are linear and at right angles to each other. In Fig. 4, this is shown with a coordinate system and the arrows 24, 25 and 26, where an arrow 24 corresponds to the z-direction, arrow 25 to the x-direction and arrow 26 to the y-direction. Furthermore, each holding system 5 comprises a position detection device 21 for detecting a position of the adhesive pad handling system 4 in respect to the liner 13 with the adhesive pads 14 arranged thereon. For example, the position detection device 21 can be a camera. It would also be possible to use other position detection devices. However, if the liner is unwound from the coil in a stepwise manner and if a very exact holding element is used for holding the adhesive pad handling system, unwinding of the coil and movement of the adhesive pad handling system can be synchronized and a position detection device is then not necessary.

Fig. 5 shows a perspective view of an adhesive pad handling system 4. The adhesive pad handling system 4 comprises a central mounting plate 22. Twelve grippers 20 are fixed to the mounting plate 22. However, it is also possible that the adhesive pad handling system comprises more or less then twelve grippers. The grippers 20 are uniformly distributed around the circumference of the central mounting plate 22. A longitudinal axis L of each gripper 20 is perpendicular to a central axis Z of the adhesive pad handling system 4. As the twelve grippers 20 are uniformly distributed around the circumference of the central mounting plate 22, the longitudinal axes L of adjacent grippers 20 enclose an angle of 30°. Furthermore, the adhesive pad handling system 4 is provided with a forth interface 16 for connection with the attaching system 3. All interfaces 5, 6, 15, 16 of the adhesive pad handling system 4, the holding element 5, and the attaching system 3 are preferably designed as a robot flanges.

Fig. 6 shows a perspective view of one gripper 20 of an adhesive pad handling system. Each gripper 20 comprises a gripper head 27 for removing an adhesive pad from a liner and for holding the adhesive pad during transport and attaching. The gripper head 27 comprises a suction cup 28 and an attaching ring 29. The suction cup 28 can be connected to a vacuum source via a vacuum channel 30. The gripper head 27 is telescopically connected with a gripper body 31. The connection between the gripper head 27 and the gripper body 31 is a flexible connection, so that the gripper head 27 can perform small correcting movements to reach an exact attaching position.

In the following, a method for automated application of adhesive pads to a workpiece, especially to a vehicle component, using the device 1 as shown above is described.

The method comprises the loading step, wherein at least one adhesive pad 14 is loaded into an adhesive pad handling system 4 and an attaching step, wherein at least one adhesive pad 14 loaded into an adhesive pad handling system 4 is attached to the workpiece. The loading step and the attaching step are at least in parts performed simultaneously. The loading step and the attaching step are thus performed at least in parts at the same time.

In the loading step, at least one adhesive pad handling system 4 is attached to the holding element 5. Furthermore at least one coil 10 with a liner 13 with adhesive pads 14 arranged thereon is provided in the providing system 8. Preferably, two coils 10 are provided in the two providing systems 8 connected to each loading system 2. The liner 13 with the adhesive pads 14 arranged thereon is unwound from the at least one coil 10 with the transport and tensioning element 9. In the embodiment shown, the liner 13 is first moved in a horizontal direction. The liner 13 is then wound around roll 11 of the transport and tensioning element 9, so that the transport direction of the liner is changed to a vertical direction and then again into a horizontal direction in reverse direction to the first horizontal direction.

The holding element 5 moves the adhesive pad handling system 4 in a loading position. In this loading position one gripper 20 of the adhesive pad handling system 5 is arranged above an adhesive pad 14 on the liner 13. Then, a gripper head 27 of the gripper 20 is moved toward the adhesive pad 14 until the gripping head 27 is in contact with the adhesive pad 14. A vacuum is applied to the suction cup 28 of the gripper head 27 so that the adhesive pad 14 is held by the gripper head 27. Then, the adhesive pad 14 is removed from the liner 13 by the gripper 20. After that, the liner 13 is moved forward so that a new adhesive pad 14 is arranged at the loading position. At the same time the adhesive pad handling system 5 is rotated by the holding element 5 around its central axis Z so that a still empty gripper 20 is placed above the next adhesive pad 14 arranged on the liner 13 and the next adhesive pad is loaded to the adhesive pad handling system 4. This process is continued until all grippers 20 of the adhesive pad handling system 4 are loaded with adhesive pads 14. A position detection device can be used to bring the grippers 20 of the adhesive pad handling system 4 at the correct loading position. However, it is also possible to synchronize the forward movement of the liner and the movement of the adhesive pad handling system so that no position detection device is necessary. As described above, the liner 13 is wound around roll 11 of the transport and tensioning element 9 so that it moves at first in a horizontal direction. As the liner is wound around roll 11, it's moving direction is changed into a vertical direction until it is again in a horizontal but reverse moving direction at the bottom of roll 11. The empty liner is then moved forward to the second roll 12 where it is wound up. The loading position is preferably the position of the liner 13 on a roll 11 where it leaves the horizontal direction. In this position, removing the adhesive pads 14 arranged on the liner 13 is facilitated.

The attaching step is performed by the attaching system 3. The attaching system 3 comprises the third interface 15 for connection to the fourth interface 16 of the adhesive pad handling system 4. At the beginning of the attaching step, the attaching system 3 is connected to an adhesive pad handling system 4 via the third and fourth interface 15, 16. The attaching system 3 then performs a three-dimensional movement through space to bring one of the grippers 20 of the loaded adhesive pad handling system 4 to an attaching position on the workpiece, i.e. the position on the workpiece where an adhesive element should be attached to the workpiece. This attaching position is found by using a further position detection device. This further position detection device can be arranged on the attaching system 3. When the adhesive pad handling system 4 is arranged at the attaching position, that means, when a gripper 20 with an adhesive pad 14 loaded thereon is at the attaching position, the gripper head 27 of this gripper 20 is moved outwardly is so that the adhesive pad 14 is placed on the workpiece. An attaching force is then applied to the adhesive pad 14 via the attaching ring 29 of the gripper 20. The vacuum in the suction cup 28 is released and the gripper head 27 can be removed from the adhesive pad. This attaching step is repeated until all adhesive pads 14 loaded into the adhesive pad handling system 4 have been attached or until all attaching positions on the workpiece are covered.

When the adhesive pad handling system 4 is empty, the attaching system 3 moves towards the loading system and delivers the adhesive pad handling system 4 to the holding element 5. The adhesive pad handling system 4 is then again attached to the loading system 2 and can be reloaded with adhesive pads. The attaching system is then free and can immediately take another loaded adhesive pad handling system for continuing the attaching step.

As each loading system 2 comprises two holding elements 5, and two providing systems 8, two adhesive pad handling systems 4 can be loaded at the same time. Furthermore, it is also possible to always store at least one loaded adhesive pad handling system in the loading system. The attaching system can then always be immediately reloaded with an loaded adhesive pad handling system so that no interruptions in the attaching step are necessary. The adhesive pads 14 arranged on the different coils 10 can have different properties, for example different sizes, different thickness or be made of different materials. The adhesive pad handling systems can therefore be loaded with different adhesive pads. The attaching system always takes the adhesive pad handling system which is loaded with the desired adhesive pads.

The attaching step can be easily integrated in an existing production process. The loading system and the attaching system are arranged in a common cell. This cell has small dimensions and can be easily integrated in an existing production line. Changing of the adhesive pad handling system in the attaching system can preferably be performed when the workpiece in the production line, that is the vehicle component or the car body, is also moved forward.

### List of reference signs

- 1: device for automated application of adhesive pads to a workpiece
- 2: loading system
- 3: attaching system
- 4: adhesive pad handling system
- 5: holding element
- 6: first interface
- 7: second interface
- 8: providing system
- 9: transport and tensioning element
- 10: coil
- 11: roll
- 12: roll
- 13: liner
- 14: adhesive pad
- 15: third interface
- 16: fourth interface
- 17: cell
- 18: wall
- 19: table
- 20: gripper
- 21: position detection device
- 22: central mounting plate
- 24: z-direction
- 25: x-direction
- 26: y-direction
- 27: gripper head
- 28: suction cup
- 29: attaching ring
- 30: vacuum channel
- 31: gripper body

- L: longitudinal axis gripper
- Z: central axis mounting plate

## Claims

1. Method for automated application of adhesive pads (14) to a workpiece, for example a vehicle component, comprising:
- a loading step, wherein at least one adhesive pad (14) is loaded into an adhesive pad handling system (4), and
- an attaching step, wherein at least one adhesive pad (14) loaded into an adhesive pad handling system (4) is attached to the workpiece,
**characterized in that**
the loading step and the attaching step are at least in parts performed simultaneously.

2. Method according to claim 1, **characterized in that** a first adhesive pad handling system (4) is loaded with at least one adhesive pad (14) in the loading step while a second adhesive pad handling system (4) attaches at least one adhesive pad (14) to the workpiece in the attaching step.

3. Method according to at least one of claims 1 or 2, **characterized in that** the loading step comprises providing at least one adhesive pad (14) on a liner (13), wherein the liner (13) with the at least one adhesive pad (14) is provided on a coil (10).

4. Method according to claim 3, **characterized in that** the loading step comprises unwinding the liner (13) from the coil (10) and tensioning the liner (13) with a transport and tensioning element (9).

5. Method according to claim 4, **characterized in that** in the loading step, the unwinding of the liner (13) from the coil (10) and the loading of the adhesive pads (14) into the adhesive handling system (4) are synchronized.

6. Method according to at least one of claims 1 or 2, **characterized in that** the loading step comprises providing at least one adhesive pad (14) on a liner (13), wherein the liner (13) with the at least one adhesive pad (14) is a sheet.

7. Method according to at least one of the preceding claims, **characterized in that** at least two loaded adhesive pad handling systems (4) are provided to be used in the attaching step.

8. Device (1) for automated application of adhesive pads (14) to a workpiece, for example a vehicle component, comprising a loading system (2) for loading an adhesive pad handling system (4) with at least one adhesive pad (14) and an attaching system (3) for attaching at least one adhesive pad (14) loaded into an adhesive pad handling system (4) to the workpiece,
**characterized in that**
the device (1) comprises at least two adhesive pad handling systems (4), so that a first of the adhesive pad handling systems (4) is connected to the loading system (2) for being loaded with adhesive pads (14) while the second adhesive pad handling system (4) is connected to the attaching system (3) for attaching at least one adhesive pad (14) to the workpiece.

9. Device (1) according to claim 8, **characterized in that** the adhesive pad handling system (4) comprises at least two grippers (20), preferably at least six grippers (20) for gripping the adhesive pads (14).

10. Device (1) according to claim 9, **characterized in that** the adhesive pad handling system (4) comprises a plurality of grippers (20), wherein the grippers (20) are arranged in a circle on the adhesive pad handling system (4) and point in a radial direction.

11. Device (1) according to at least one of claims 8 to 10, **characterized in that** the loading system (2) is connected with at least one providing system (8) for providing the adhesive pads (14).

12. Device (1) according to claim 11, **characterized in that** the providing system (8) comprises a tensioning and transport element (9).

13. Device (1) according to claim 11 or 12, **characterized in that** the loading system (2) is connected with at least two providing systems (8).

14. Device according to at least one of claims 8 to 13, **characterized in that** at least the attaching system (3) is provided with a position detection device.

15. Device (1) according to at least one of claims 8 to 14, **characterized in that** the loading system (2) and the attaching system (3) are arranged in a common cell (17).

16. Device (1) according to at least one of claims 8 to 15, **characterized in that** the at least one adhesive pad handling system (4) is provided with at least one interface (7, 16) for an industrial robot.
